# EUROPEAN PATENT APPLICATION

(11) **EP 1 876 479 A1**
(43) Date of publication of application: **09.01.2008**
(21) Application number: 07013181.8
(22) Date of filing: 05.07.2007
(51) Int. Cl.: G02B 6/00, F21V 8/00, B29C 43/10

(54) **Apparatus for forming pattern on light guiding plate and method of manufacturing light guiding plate by hydrostatic pressing**

(30) Priority: 07.07.2006 KR 20060063997
(71) Applicant: Samsung Electronics Co., Ltd., Yeongtong-gu Suwon-city, Gyeonggi-do 442-742 (KR)
(72) Inventor: Joo, Byung Yun, Seoul, 100-859 (KR); Kim, Jin Soo, Songpa-Gu Seoul, 138-240 (KR); Ha, Ju Hwa, Seodaemun-Gu Seoul, 120-847 (KR); Song, Min Young, Yongsan-Gu Seoul 140-828 (KR); Paek, Jung Wook, Suwon-si Gyeonggi-Do, 440-200 (KR); Choi, Jin Sung, Cheonan-Si Chungcheongnam-Do, 330-763 (KR)
(74) Representative: Dr. Weitzel & Partner

(57) **Abstract**

An apparatus for forming a pattern for a light guiding plate and a method of manufacturing a light guiding plate. The method of manufacturing a light guiding plate includes preparing a plurality of light guiding plates, each of the light guiding plates being a mother substrate on which optical patterns are formed, disposing molding frames including molding patterns on at least one surface of the light guiding plates, forming optical patterns corresponding to the molding patterns on the light guiding plates and removing the molding frames from the respective light guiding plates. The forming optical patterns includes hydrostatic pressing of the light guiding plates and the molding frames.

## Description

### BACKGROUND OF THE INVENTION

### 1. Field of the Invention

The invention relates to an apparatus for forming a pattern for a light guiding plate and a method of manufacturing a light guiding plate. In particular, the invention relates to an apparatus for forming pattern for a light guiding plate, the apparatus forming optical patterns on the light guiding plate using a hydrostatic pressing method, and a method of manufacturing a light guiding plate using the same.

### 2. Description of the Related Art

Instead of a cathode ray tube ("CRT"), flat panel displays, such as a liquid crystal display ("LCD"), a plasma display panel ("PDP"), and the like, are being rapidly developed. Among the flat panel displays, since the liquid crystal display ("LCD") is not a self-emitting type like the plasma display panel and the like, the liquid crystal display ("LCD") needs a backlight unit that includes light sources, such as lamps, so as to visually recognize displayed contents.

The backlight unit is located at the rear of a liquid crystal display panel on which pixels for displaying images are formed. In a case of an edge type backlight unit in which lamps serving as light sources are disposed at an edge of the liquid crystal display, the backlight unit includes the lamps serving as the light sources, a light guiding plate that is disposed at the side of the lamps, a diffusion sheet that is disposed above the light guiding plate, a first prism sheet, a second prism sheet, and a luminance enhancing sheet.

However, in the backlight unit according to the related art, since a plurality of optical sheets are disposed above the light guiding plate, the total thickness of the backlight unit is inevitably increased. Further, after light incident from the light sources passes through the plurality of optical sheets, the light is emitted to the liquid crystal display panel, which causes light loss. In particular, since optical sheets used are relatively expensive, manufacturing cost of the liquid crystal display is increased.

Therefore, an integrated light guiding plate, in which one light guiding plate serves as a plurality of optical sheets, is attracting attention. An advantage of the integrated light guiding plate is relatively high light collecting efficiency and a reduction in thickness of the liquid crystal display, while achieving reduction in cost.

According to a method of obtaining the high light collecting efficiency, light-scattering particles in a dot pattern are printed on a surface of the plate, such as a mother substrate of the light guiding plate. In another method, triangular prism patterns are formed on the surface of the plate. In a case of the latter, it is observed that the light collecting efficiency is excellent.

However, the method including the triangular prism patterns formed on the surface of the plate does not have an advantage of cost reduction or the like, and as a result, has not been applied to most of the backlight units for the following reasons. High light collecting efficiency is difficult to achieve because it is difficult to form precise patterns according to a processing technique of the related art, such as an injecting process, a cutting process, a pressing process, and the like. Further, it is difficult to reduce the thickness of the patterns to a predetermined level or less. Moreover, since it takes a relatively long time to form patterns, the manufacturing cost is further increased.

### BRIEF SUMMARY OF THE INVENTION

An exemplary embodiment provides an apparatus for forming a pattern for a light guiding plate and a method of manufacturing a light guiding plate that can realize relatively high light collecting efficiency and a reduction in thickness. At the same time, a reduction in cost may be achieved by forming optical patterns having high light collecting efficiency on a plurality of light guiding plates at the approximately same time, such as using a hydrostatic pressing method.

In an exemplary embodiment, an apparatus for forming a pattern for a light guiding plate includes an airtight container filled with a pressurized fluid and accommodating a plurality of vacuum packs, each of the vacuum packs including a light guiding plate and a molding frame of the light guiding plate sealed therein, a pressurizing unit pressurizing the fluid and applying a molding pressure to the vacuum packs, and a heating unit heating the fluid and providing a molding temperature to the vacuum packs.

In an exemplary embodiment, water (H₂O) or oil may be used as the fluid.

In an exemplary embodiment, the molding frame may include molding patterns that have a prism shaped cross-section. The molding frame may have a thickness of approximately 0.1 to 10 millimeters (mm).

In an exemplary embodiment, the molding frame may be disposed on one surface of the light guiding plate. The molding frames may be disposed on both of opposing surfaces of the light guiding plate The molding patterns of the molding frames may cross each other at right angles.

An exemplary embodiment, the apparatus for forming a pattern for a light guiding plate may further include a plurality of mounting members fixing the vacuum packs in the container. Each of the mounting members may include a pair of clamps.

An exemplary embodiment of a method of manufacturing a light guiding plate includes preparing a plurality of light guiding plates, each of the light guiding plates being a mother substrate on which optical patterns are formed, disposing molding frames including molding patterns on a surface of each of the light guiding plates, forming optical patterns corresponding to the molding patterns on the light guiding plates, such as performing hydrostatic pressing, and removing the molding frames from the respective light guiding plates.

In an exemplary embodiment, the disposing the molding frames on which the molding patterns are formed on the light guiding plates may include inserting the light guiding plates and the molding frames into vacuum packs, and performing vacuum and sealing processes thereon.

In an exemplary embodiment, the disposing the molding frames may further include disposing the molding frames on both of opposing surfaces of each of the light guiding plates, the molding patterns of the molding frames crossing each other at right angles.

In an exemplary embodiment, the hydrostatic pressing may be performed on the plurality of light guiding plates at substantially the same time.

In an exemplary embodiment, the pressurized fluid includes water (H₂O) or oil.

In an exemplary embodiment, the hydrostatic pressing may be performed under a pressure of about 0.1 to about 100 megapascals (MPa).

In an exemplary embodiment, the hydrostatic pressing may be performed substantially at a transition temperature (Tg) of the light guiding plates or at a molding temperature greater than the transition temperature of the light guiding plates.

In an exemplary embodiment, the hydrostatic processing may be performed for about 30 seconds to about 30 minutes.

An exemplary embodiment of a method of manufacturing a light guiding plate includes preparing a plurality of light guiding plates on which an optical pattern is formed, disposing a molding frame including an optical pattern on a first surface of each of the light guiding plates, pressing the molding frames and forming the optical pattern on the first surface of each of the light guiding plates, the pressing including hydrostatically pressing and removing each of the mold frames from a respective light guiding plate.

### BRIEF DESCRIPTION OF THE DRAWINGS

FIG. 1 is a schematic view illustrating an exemplary embodiment of a structure of an apparatus for forming a pattern for a light guiding plate according to the invention;
FIG. 2 is a schematic cross-sectional view illustrating a vacuum pack of FIG. 1;
FIGS. 3 to 6 are views illustrating exemplary embodiments of processes of a method of manufacturing a light guiding plate according to the invention;
FIG. 7 is a perspective view illustrating an exemplary embodiment of light guiding plate including a light diffusion portion according to the invention; and
FIG. 8 is a plan view illustrating the light diffusion portion of the light guiding plate of FIG. 7.

### DETAILED DESCRIPTION OF THE INVENTION

The invention is described more fully hereinafter with reference to the accompanying drawings, in which exemplary embodiments of the invention are shown. The invention may, however, be embodied in many different forms and should not be construed as being limited to the embodiments set forth herein. Rather, these embodiments are provided such that this disclosure will be thorough and complete and will fully convey the concept of the invention to those skilled in the art. Like reference numerals designate like elements. In the drawings, the size and relative sizes of layers and regions may be exaggerated for clarity.

It will be understood that when an element or layer is referred to as being "on" or "connected to" another element or layer, the element or layer can be directly on or connected another element or layer or intervening elements or layers. In contrast, when an element is referred to as being "directly on" or "directly connected to" another element or layer, there are no intervening elements or layers present. As used herein, the term "and/or" includes any and all combinations of one or more of the associated listed items.

It will be understood that, although the terms first, second, third, etc., may be used herein to describe various elements, components, regions, layers and/or sections, these elements, components, regions, layers and/or sections should not be limited by these terms. These terms are only used to distinguish one element, component, region, layer or section from another region, layer or section. Thus, a first element, component, region, layer or section discussed below could be termed a second element, component, region, layer or section without departing from the teachings of the present invention.

Spatially relative terms, such as "below," "above" and the like, may be used herein for ease of description to describe the relationship of one element or feature to another element(s) or feature(s) as illustrated in the figures. It will be understood that the spatially relative terms are intended to encompass different orientations of the device in use or operation, in addition to the orientation depicted in the figures. For example, if the device in the figures is turned over, elements described as "below" relative to other elements or features would then be oriented "above" relative to the other elements or features. Thus, the exemplary term "below" can encompass both an orientation of above and below. The device may be otherwise oriented (rotated 90 degrees or at other orientations) and the spatially relative descriptors used herein interpreted accordingly.

The terminology used herein is for the purpose of describing particular embodiments only and is not intended to be limiting of the invention. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof.

Embodiments of the invention are described herein with reference to cross-section illustrations that are schematic illustrations of idealized embodiments (and intermediate structures) of the invention. As such, variations from the shapes of the illustrations as a result, for example, of manufacturing techniques and/or tolerances, are to be expected. Thus, embodiments of the invention should not be construed as limited to the particular shapes of regions illustrated herein but are to include deviations in shapes that result, for example, from manufacturing.

For example, an implanted region illustrated as a rectangle will, typically, have rounded or curved features and/or a gradient of implant concentration at its edges rather than a binary change from implanted to non-implanted region. Likewise, a buried region formed by implantation may result in some implantation in the region between the buried region and the surface through which the implantation takes place. Thus, the regions illustrated in the figures are schematic in nature and their shapes are not intended to illustrate the actual shape of a region of a device and are not intended to limit the scope of the invention.

Unless otherwise defined, all terms (including technical and scientific terms) used herein have the same meaning as commonly understood by one of ordinary skill in the art to which this invention belongs. It will be further understood that terms, such as those defined in commonly used dictionaries, should be interpreted as having a meaning that is consistent with their meaning in the context of the relevant art and will not be interpreted in an idealized or overly formal sense unless expressly so defined herein.

All methods described herein can be performed in a suitable order unless otherwise indicated herein or otherwise clearly contradicted by context. The use of any and all examples, or exemplary language (e.g., "such as"), is intended merely to better illustrate the invention and does not pose a limitation on the scope of the invention unless otherwise claimed. No language in the specification should be construed as indicating any non-claimed element as essential to the practice of the invention as used herein.

Hereinafter, embodiments of the invention will be described in detail with reference to the accompanying drawings.

An exemplary embodiment of forming a light guide plate may include a hydrostatic pressing method, in which a predetermined molding frame is prepared, a pressurized fluid is applied to the molding frame in a state where an object to be processed is closely adhered or positioned to the mold, and the object to be processed is formed to have a desired shape. Molding quality varies according to the pressure of the fluid which is applied to the object to be processed, a temperature of the fluid and/or a duration time the pressurized fluid is applied to the object to be processed. The pressure of the fluid, the temperature of the fluid, and the duration time in a state where an optimal molding quality is provided are hereinafter defined as a "molding pressure," a "molding temperature" and a "molding time," respectively.

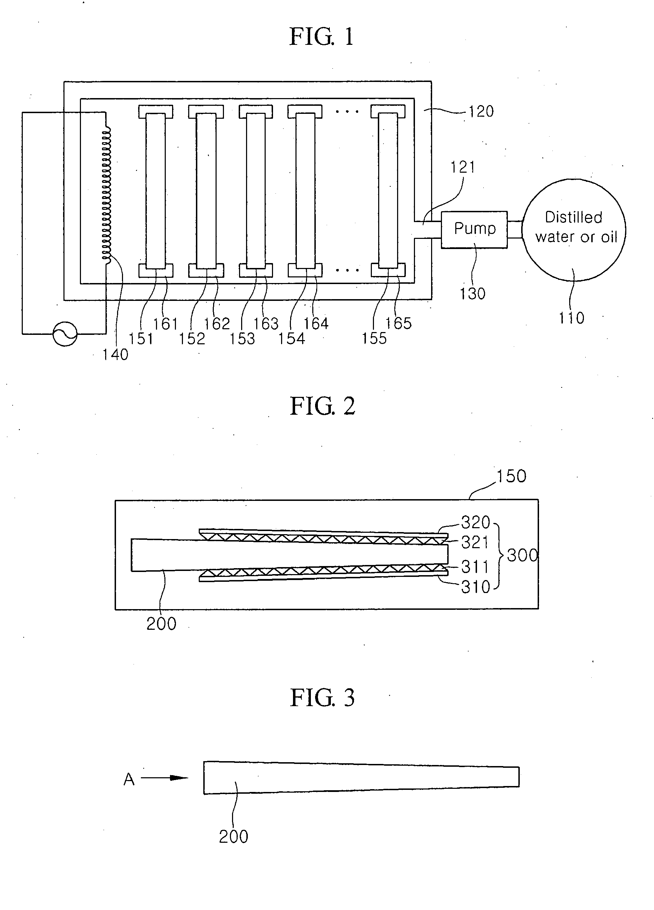

FIG. 1 is a schematic view illustrating an exemplary embodiment of a structure of an apparatus for forming a pattern for a light guiding plate according to the invention. FIG. 2 is a schematic cross-sectional view illustrating a structure of a vacuum pack of FIG. 1.

Referring to FIGS. 1 and 2, the apparatus for forming a pattern for a light guiding plate includes an airtight container 120 that is filled with pressurized fluid 110 and accommodates a plurality of vacuum packs 151 to 155, as illustrated in FIG. 1. An individual vacuum pack 150, as illustrated in FIG. 2, includes a light guiding plate 200 and a molding frame 300 sealed within the vacuum pack 150. The apparatus for forming a pattern for a light guiding plate further includes a pressurizing unit 130, such as a pump, that pressurizes the fluid 110 and provides a molding pressure to the vacuum packs 151-155, and a heating unit 140 that heats the fluid 110 and provides a molding temperature to the vacuum packs 151-155. The apparatus for forming a pattern for a light guiding plate may further include a timing member (not shown) to control and/or monitor the molding time.

In exemplary embodiments, the molding pressure is in a range of about 0.1 to 100 megapascals (MPa). In one exemplary embodiment, the molding temperature is substantially equal to a transition temperature Tg of the light guiding plates 200, which is considered an object to be processed, or greater than the transition temperature Tg. If the temperature of the fluid 110 is lower than the transition temperature Tg of the light guiding plates 200 being used, a solute may be added to the fluid 110 so as to increase the temperature of the fluid 110.

Referring to FIG. 1, the fluid 110 flows into the container 120 and is compressed. The compressed fluid 110 pressurizes the molding frame 300 sealed in the vacuum packs 151-155 in three dimensions, or essentially from all directions. That is, the fluid 110 performs hydrostatic pressing. In exemplary embodiments, water (H₂O) or oil may be used as the fluid 110.

The container 120 provides an airtight space into which the fluid 110 flows to perform hydrostatic pressing. The container 120 includes a flow path 121, such as provided at a side wall, at a side of the container 120, and mounting members 161 to 165. In exemplary embodiments, the container 120 is formed of a material having a physical characteristic such that the material has a relatively small amount or a least amount of distortion caused by the molding pressure and/or the molding temperature.

As illustrated in FIG. 1, the flow path 121 passes through the side wall of one side of the container 120, and an end portion of the flow path 121 is connected to a pressurizing unit 130 that is provided outside the container 120. The flow path 121 connects an inside of the container 120 with the outside of the container.

The mounting members each 161-165 fix the vacuum pack 151-155 such that each of the vacuum packs 151-155 are placed at designated positions within the container 120. In an exemplary embodiment, a plurality of mounting members 161-165 are preferably provided to mount a plurality of vacuum packs 151-155. The plurality of mounting members 161-165 are arranged substantially in parallel to each other at predetermined intervals, such that a substantially same molding pressure is applied to all of the vacuum packs 151-155. Alternatively, any of a number of the mounting members 161-165 can be removed, if necessary, to achieve the optimal molding quality.

In the illustrated embodiment, each of the mounting members 161-165 may include a pair of clamps. However, the invention is not limited thereto. Alternatively, the mounting members 161-165 may be formed using mounting grooves and/or mounting latches that are capable of fixing an individual vacuum pack 150 or a plurality of the vacuum packs 150.

In the illustrated embodiment, the clamps as mounting members, are arranged substantially linearly or in a line so as to be parallel to each other in same plane of the container 120. Alternatively, the mounting members may be arranged on a plurality of different planes or layers, the mounting members may be arranged in a plurality of lines, i.e., two or more lines, and the mounting members may be alternately arranged across the container 120 such as when viewed on a plane in FIG. 1.

The pressurizing unit 130 pressurizes the fluid 110 such that the pressure of the fluid filled into the container 120 reaches a predetermined molding pressure. As shown in FIG. 1, a pump 130 as the pressurizing unit pushes the fluid 110 from outside the container 120 into the container 120 and pressurizes the fluid 110 in the container. In an alternative embodiment, any of a number of pressing devices that compresses the fluid filled into the container so as to pressurize the fluid may be used as the pressurizing unit 130.

The heating unit 140 heats the fluid 110 such that the temperature of the fluid provided into the container 120 reaches a predetermined molding temperature. As illustrated in FIG. 1, a heating coil having a winding shape may be used as the heating unit 140. As in the illustrated embodiment, one heating coil 140 serving as the heating unit is provided inside the container 120. Alternatively, the heating coil 140 may be provided outside the container 120 and/or a plurality of heating coils 140 may be provided. In one exemplary embodiment, the heating coil 140 may be provided outside the container 120 or inside the flow path 121, such that the fluid 110 heated from the outside of the container 120 or the fluid 110 heated when the fluid 110 flows in the flow path 121, may flow into and be provided to the container 120.

The pressurizing unit 130 and the heating unit 140 maintain the molding pressure and the molding temperature inside the container for a predetermined time, that is, the molding time, when a hydrostatic pressing is performed. In an exemplary embodiment, the molding time is in a range of approximately 30 seconds to 30 minutes, under a condition that the pressure and temperature of fluid inside the container 120 are maintained at the molding pressure and the molding temperature, respectively.

Referring to FIG. 2, the light guiding plate 200, considered as the object to be processed, and the molding frame 300 are prepared in the vacuum pack 150. The molding frame 300 includes a first molding frame 310 and a second molding frame 320, having molding patterns 311 and 321, respectively disposed thereon. The first molding frame 310 and the second molding frame 320 are disposed above and below the light guiding plate 200, respectively. A vacuum process is performed on the inside of the vacuum pack 150 when the light guiding plate 200, the first molding frame 310 and the second molding frame 320 are contained within. In exemplary embodiments, the molding frame 300 is arranged at one side or at both of opposing sides of the light guiding plate 200, if necessary based on the design or requirements of the light guiding plate 200. Where the molding frame is arranged on one side, the molding frame may be disposed on an upper side or a lower side of the light guiding plate 200.

The first molding frame 310 and the second molding frame 320 may be formed in a separate type or in an integrated type. As used herein, "integrated" is used to indicate formed to be a single unit or piece rather than combining separate elements to form the molding frame 310 and 320. In an exemplary embodiment, each of the first molding frame 310 and the second molding frame 320 is formed of a metallic material that has relatively good thermal conductivity and hardness. Each of the first and second molding frames 310 and 320 may have a thickness, e.g., from a distal end of the molding patterns 311 and 312 to an opposing surface of the first and second molding frames 310 and 320, respectively, of approximately 0.1 to 10 millimeters (mm). The thickness of the molding frame 300 may be increased or decreased in proportion to an area of the light guiding plate 200 requiring a molding pattern or ultimately being used in the display device.

The molding patterns 311 and 321 formed on the first and second molding frames 310 and 320 may have any of a number of various prism shapes in a cross-section as is suitable for the purposes described herein. The cross-sectional shape of the prisms of the molding patterns 311 and 321 may include, but are not limited to, triangular, hemispherical, or lens-shaped prism shapes. The sections of the molding patterns 311 and 321 are not limited to the above-described prism shapes. Alternatively, the cross-sections of the molding patterns 311 and 321 may have polygonal shapes, such as, a square, a pentagon, or the like.

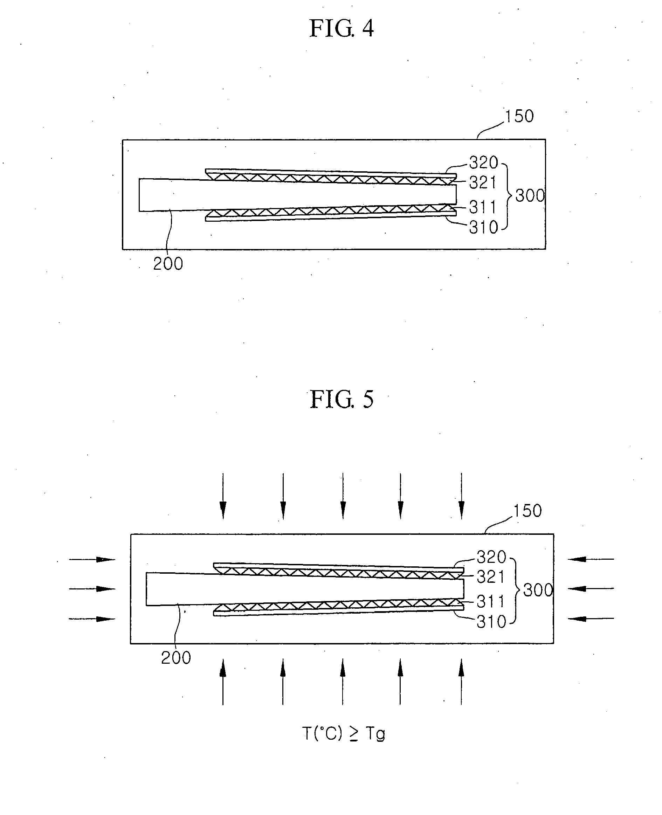

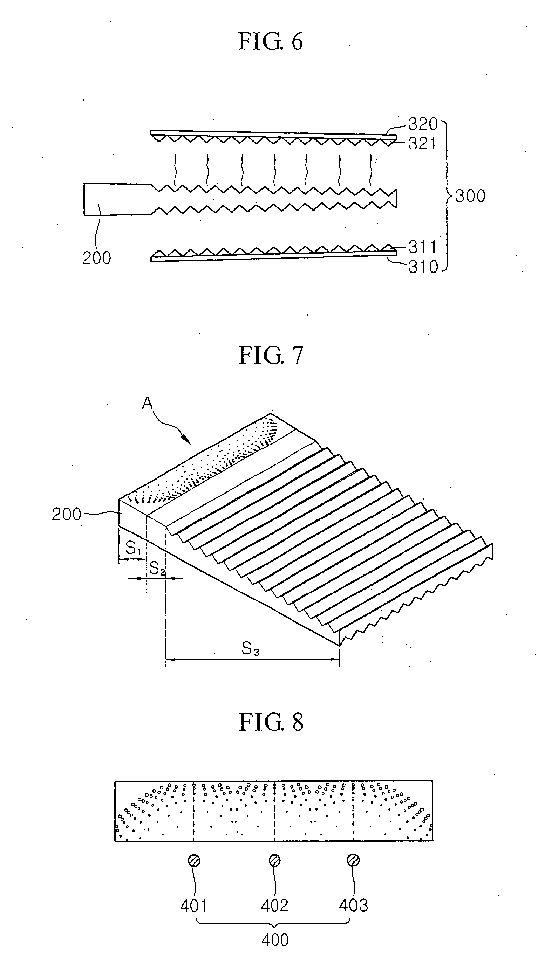

Where the molding frame is arranged on each of two opposing sides of the light guiding plate 200, the molding patterns 311 and 321 may be arranged in parallel to each other in a first direction and extend longitudinally in a second direction relative to the first direction. The molding patterns 311 and 321 of the first molding frame 310 and the second molding frame 320 are disposed to face each other. The first and second molding patterns 311 and 321, e.g., in their extended directions, may be disposed in parallel to one another (FIGS. 4-6) or may be disposed to cross each other at a predetermined angle (FIG. 7). Where the molding patterns 311 and 321 are disposed to cross each other, the first and second molding patterns 311 and 321 may be disposed to cross each other at right angles.

Using the apparatus- to form a pattern for the light guiding plate that has the above-described structure, it is possible to form optical patterns having high light collecting efficiency, such as, prism patterns that have a triangular shape in section, on a plurality of light guiding plates at substantially the same time. This will be described as follows.

FIGS. 3 to 6 are views illustrating exemplary embodiments of processes of a method of manufacturing a light guiding plate according to the invention.

As shown in FIG. 3, the light guiding plate 200 is prepared. The light guiding plate 200 is considered a mother substrate on which optical patterns are formed. An end portion "A" of the light guiding plate 200 is an incident portion (e.g. surface) upon which light is provided from light sources that are disposed at an edge of the light guide plate 200. In exemplary embodiments, a polymer-based plate is used as the light guiding plate 200. In a direction away from the incident portion "A," a thickness in a vertical direction or a direction perpendicular to the incident surface of the light guiding plate 200 decreases. The light guiding plate 200 illustrated in FIG. 3 is considered to have an inclined structure, but the invention is not limited thereto.

As shown in FIG. 4, the first molding frame 310 and the second molding frame 320 include molding patterns thereon. The first molding frame 310 and the second molding frame 320 are disposed above and below the light guiding plate 200, respectively. The light guide plate, the first molding frame 310 and the second molding frame 320 are inserted into the vacuum pack 150, sealed, and vacuumized.

As shown in FIG. 5, the vacuum pack 150 is put in the container 120 of the above-described apparatus for forming a pattern for the light guiding plate. The pressurizing unit 130 and the heating unit 140 are operated so as to maintain pressure and temperature of the fluid inside the container 120 at predetermined molding pressure and molding temperature. The light guiding plate 200 heated at the molding temperature is emulsified into a state or condition appropriate for molding. The molding temperature "T" is substantially equal to a transition temperature Tg of the light guiding plate 200 or is greater than the transition temperature.

As the light guide plate 200, the first molding frame 310 and the second molding frame 320 sealed in the vacuum pack 150 are pressurized by the molding pressure in the container 120 as indicated by the arrow around the vacuum pack 150, predetermined optical patterns corresponding to the molding patterns 311 and 321 are respectively formed on contact surfaces of the light guiding plate 200. The optical patterns may be prism patterns having a triangular, hemispherical, or lens-shaped cross-section corresponding to the molding patterns 311 and 321 having the prism shape in cross-section. As used herein, "corresponding" is used to indicate corresponding substantially in shape, dimension and/or positional placement relative to another element.

As shown in FIG. 6, the pressure of the fluid in the container 120 is reduced, and the temperature of the fluid is lowered, such that the light guiding plate 200 having the prism patterns thereon is slowly cooled as indicated by the arrows away from the light guide plate 200. Hydrostatic pressing has been performed on the light guide plate 200. When the light guiding plate 200 is hardened after a predetermined time, the vacuum pack 150, including the light guide plate 200, the first molding frame 310 and the second molding frame 320, is taken out of the container 120. The vacuum pack 150 is opened so as to be separated from the light guiding plate 200, the first molding frame 310 and the second molding frame 320 that are attached to the light guiding plate 200.

When the hydrostatic pressing is performed, a molding time is secured or predetermined to be sufficient enough to precisely transcribe the molding patterns 311 and 321 of the first molding frame 310 and the second molding frame 320, respectively, to the light guiding plate 200. In one exemplary embodiment, the molding time is in a range of approximately 30 seconds to 30 minutes on the condition that the pressure and temperature of the fluid 110 in the container 120 are maintained at the molding pressure and the molding temperature. In an exemplary embodiment, when the hydrostatic pressing is performed, a plurality of light guiding plates 200 may be prepared, and the hydrostatic pressing be performed on the plurality of light guiding plates 200 at substantially the same time.

In exemplary embodiments a light diffusion portion and a light guide portion may be formed on the light guiding plate 200 having the prism patterns thereon, so as to improve the uniformity in the luminance and light utilization.

FIG. 7 is a perspective view illustrating an exemplary embodiment of a light guiding plate including a light diffusion portion according to the invention, and FIG. 8 is a plan view illustrating the light diffusion portion of FIG. 7.

Referring to FIGS. 7 and 8, the light diffusion portion S₁ diffuses light incident from light sources. In an exemplary embodiment, the light diffusion portion S₁ may be formed by printing a plurality of diffusion patterns on a surface of the light guiding plate 200. Alternatively, the light diffusion portion S₁ may be formed by disposing a plurality of diffusion beads in the light guiding plate 200.

In exemplary embodiments, the diffusion patterns may be formed to have a substantially concentric circular shape such as when viewed on a plane, such that incident light is uniformly diffused and scattered. As a distance from the incident portion "A" of the light guide plate increases, the diffusion patterns become denser. The diffusion patterns may have any of a number of various shapes, such as a circle, a triangle, or a square. The diffusion patterns can also have concave or convex surfaces.

The molding patterns on an upper and a lower surface of the light guiding plate 200 as illustrated in FIG. 7, are disposed crossing each other at a predetermined angle, such as at right angles or perpendicular to each other. During manufacturing, the first and second molding patterns 311 and 321 would be respectively positioned in the apparatus at right angles to each other to form the patterns on the light guiding plate 200 as illustrated in FIG. 8.

Referring to FIG. 8, the concentric circular shape of the diffusion patterns may be used when a plurality of light sources 401, 402, and 403 are disposed at an edge of the light guiding plate 200. The diffusion patterns may be arranged in the concentric circular shape to correspond to the light sources 401, 402 and 402 as indicated by the dotted lines in FIG. 8. However, the invention is not limited thereto, and the concentric circular shape of the diffusion patterns may be changed according to the number of light sources 400 and/or may be changed into any of a number of different shapes or arrangements.

The light guide portion S₂ of the light guide plate 200 guides light emitted from the light diffusion portion S₁ to a prism portion S₃ on which prism patterns are formed. In exemplary embodiments, the light guide portion S₂ may be formed by disposing a transparent plate or an air gap in the light guide plate 200. The transparent plate S₂ may be interposed between the light diffusion portion S₁ and the prism portion S₃ of the light guiding plate 200 at predetermined intervals, or the light diffusion portion S₁ and the prism portion S₃ of the light guiding plate 200 may be spaced apart from each other at a predetermined interval. In the illustrated embodiment of FIG. 8, the light guide portion S₂ is formed by disposing the transparent plate between the light diffusion portion S₁ and the prism portion S₃ of the light guiding plate 200.

In the illustrated embodiment, the light diffusion portion S₁ and the light guide portion S₂ are formed after the prism patterns S₃ are formed on the light guiding plate 200. Alternatively, it is also possible, that the prism patterns S₃ are formed after the light diffusion portion S₁ and the light guide portion S₂ are formed on the light guiding plate 200.

In the illustrated embodiments of the method of manufacturing a light guiding plate according to the invention, the prism patterns can be formed on a plurality (e.g., tens or hundreds) of light guiding plates at substantially the same time. The prism patterns can be formed substantially precise because sufficient molding time is secured when forming the prism patterns. The precise prism patterns having high light collecting efficiency can be formed on a relatively large number of light guiding plates at substantially the same time. Advantageously, prism patterns having relatively high light collecting efficiency, and a reduction in overall thickness of a backlight assembly due to pressing can be realized. At the same time, reduction in cost can be achieved, such as by the "mass production" of light guiding plates at substantially the same time.

As in the illustrated embodiments, precise prism patterns can be formed on a relatively large number of light guide patterns using a hydrostatic pressing method. Advantageously, prism patterns having relatively high light collecting efficiency that the prism patterns have, and a reduction in overall thickness of the backlight assembly due to pressing can be realized. At the same time, reduction in cost can be achieved at the time of the "mass production" of the light guiding plates.

Although the invention has been described with reference to the accompanying drawings and the preferred embodiments, the invention is not limited thereto, but is defined by the appended claims. Therefore, it should be noted that various changes and modifications can be made by those skilled in the art without departing from the technical spirit of the appended claims.

## Claims

1. An apparatus for forming a pattern for a light guiding plate, the apparatus comprising:
an airtight container filled with a pressurized fluid and accommodating a plurality of vacuum packs, each of the vacuum packs including a light guiding plate and a molding frame of the light guiding plate sealed therein;
a pressurizing unit pressurizing the fluid and applying a molding pressure to the vacuum packs; and
a heating unit heating the fluid and providing a molding temperature to the vacuum packs.

2. The apparatus of claim 1, wherein the pressurized fluid is water (H₂O) or oil.

3. The apparatus of claim 1, wherein the molding frame has a thickness of approximately 0.1 to 10 millimeters (mm).

4. The apparatus of claim 1, wherein the molding frame includes molding patterns having prism shaped cross-sections.

5. The apparatus of claim 1, wherein the molding frame is disposed on one surface of the light guiding plate.

6. The apparatus of claim 1, wherein the molding frame includes a first molding frame disposed on a first surface of the light guiding plate and a second molding frame disposed on a second surface of the light guiding plate opposite to the first surface, the molding patterns of the first molding frame and the second molding frame crossing each other at right angles.

7. The apparatus of claim 1, further comprising:
a plurality of mounting members fixing the vacuum packs in the container.

8. The apparatus of claim 7, wherein a pair of clamps is used as a mounting member.

9. A method of manufacturing a light guiding plate, the method comprising:
preparing a plurality of light guiding plates, each of the light guiding plates being a mother substrate on which optical patterns are formed;
disposing molding frames including molding patterns, on at least one surface of each of the light guiding plates;
forming optical patterns corresponding to the molding patterns on the light guiding plates, the forming optical patterns including hydrostatic pressing; and
removing the molding frames from the respective light guiding plates.

10. The method of claim 9, wherein the disposing molding frames includes inserting the light guiding plates and the molding frames disposed on the at least one surface of the each of the light guiding plate into vacuum packs, and performing vacuum and sealing processes thereon.

11. The method of claim 9, wherein the disposing molding frames includes disposing molding frames on both of opposing surfaces of the light guiding plates, the molding patterns of the molding frames crossing each other at right angles.

12. The method of claim 9, wherein the hydrostatic pressing is performed on the plurality of light guiding plates at substantially the same time.

13. The method of claim 9, wherein the hydrostatic pressing includes using water (H₂O) or oil as a pressurized fluid.

14. The method of claim 9, wherein the hydrostatic pressing is performed under a pressure of about 0.1 to about 100 megapascals (MPa).

15. The method of claim 9, wherein the hydrostatic pressing is performed substantially at a transition temperature (Tg) of the light guiding plates or at a molding temperature that is greater than the transition temperature of the light guiding plates.

16. The method of claim 9, wherein the hydrostatic processing is performed for about 30 seconds to about 30 minutes.

17. A method of manufacturing a light guiding plate, the method comprising:
preparing a plurality of light guiding plates on which an optical pattern is formed,
disposing a molding frame including an optical pattern on a first surface of each of the light guiding plates,
pressing the molding frames and forming the optical pattern on the first surface of each of the light guiding plates, the pressing including hydrostatically pressing; and
removing each of the mold frames from a respective light guiding plate.

18. The method of claim 17, wherein the disposing a molding frame includes inserting the molding frame and the light guiding plate into a vacuum pack, applying a vacuum to the vacuum pack and sealing the vacuum pack.

19. The method of claim 18, wherein the pressing the molding frames further includes hydrostatically pressing each of the vacuum packs at approximately the same time.

20. The method of claim 18, wherein the disposing a molding frame further includes disposing the vacuum packs into an airtight container and the pressing the molding frames further includes hydrostatically pressing each of the vacuum packs at approximately the same time in the airtight container.
